**Europäisches Patentamt**

**European Patent Office**

**Office européen des brevets**

(19)

(11) Veröffentlichungsnummer: **0 222 761**
**B1**

(12)

# EUROPÄISCHE PATENTSCHRIFT

(45) Veröffentlichungstag der Patentschrift:
**01.06.88**

(21) Anmeldenummer: **85903824.2**

(22) Anmeldetag: **20.07.85**

(86) Internationale Anmeldenummer:
**PCT/EP 85/00362**

(87) Internationale Veröffentlichungsnummer:
**WO 86/00967 (13.02.86** Gazette 86/4)

(51) Int. Cl.⁴: **F 16 H 57/06**

(54) **GANGSCHALTEINRICHTUNG.**

(30) Priorität: **26.07.84 PC /EP84/002 30**

(43) Veröffentlichungstag der Anmeldung:
**27.05.87 Patentblatt 87/22**

(45) Bekanntmachung des Hinweises auf die Patenterteilung:
**01.06.88 Patentblatt 88/22**

(84) Benannte Vertragsstaaten:
**DE GB SE**

(56) Entgegenhaltungen:
**DE - A - 2 430 678**
**DE - A - 3 011 131**
**DE - A - 3 141 271**
**FR - A - 2 251 860**
**FR - A - 2 303 998**
**US - A - 3 533 301**

(73) Patentinhaber: **ZAHNRADFABRIK FRIEDRICHSHAFEN AKTIENGESELLSCHAFT, Löwentaler Strasse 100 Postfach 2520,
D-7990 Friedrichshafen 1 (DE)**

(72) Erfinder: **SCHREINER, Friedrich, Eichelen 16,
D-7996 Meckenbeuren (DE)**
Erfinder: **EBNER, Otto, Eichelen 10,
D-7996 Meckenbeuren (DE)**
Erfinder: **BURI, Gerhard, Brunnenstrasse 14,
D-7990 Friedrichshafen (DE)**
Erfinder: **GRUPP, Bernhard, Lehenstrasse 20,
D-7987 Weingarten (DE)**

(74) Vertreter: **Raue, Reimund, Zahnradfabrik Friedrichshafen AG Löwentaler Strasse 100 Postfach 2520,
D-7990 Friedrichshafen 1 (DE)**

## Beschreibung

Es sind Gangschalteinrichtungen mit einem H-förmigen Schaltbild und mit einer Rückführung des Schalthebels z. B. in die Gasse der Gänge 3/4 für 4-, 5- und 6-Gang-Getriebe bekannt, wenn dieser in die Neutralstellung verschoben wird. Die Schaltung eines Ganges ausserhalb der vorbestimmten Gasse erfordert also vom Fahrer neben der Bewegung des Schalthebels in Gangrichtung — vorrangig in Vorwärts- und Rückwärtsfahrtrichtung — noch einem Druck quer zur Fahrtrichtung — z. B. in die Gasse 1/2 nach links und in die Gasse 5 oder 5/6 nach rechts. Diese Einrichtungen haben sich bei 4- und 5-Gang-Getrieben auch bewährt, weil sie dem Fahrer die Auffindung der richtigen Gasse und des richtigen Ganges erleichtern, ohne dass dieser die Stellung des Schalthebels optisch beobachten muss.

Auch bei Gangschalteinrichtungen eines Gruppengetriebes nach einem Doppel-H-Schaltbild, bei der die Rückführung des Schalthebels im unteren Bereich — Gänge 1 bis 4 — z. B. in die Gasse der Gänge 3/4 und nach Umschaltung der Gruppe in den höheren Bereich — Gänge 5 bis 8 — in die Gasse der Gänge 5/6 erfolgt, haben sich bewährt und sind eine grosse Erleichterung für den Fahrer.

Bei 6-Gang-Getrieben, die ja in der Regel nicht als Gruppengetriebe ausgeführt sind, können dagegen insbesondere beim Rückschalten aus dem 6. Gang leicht Fehlschaltungen vorkommen, indem der Fahrer, statt den 5. Gang zu schalten, infolge der Rückführung des Schalthebels in die Gasse der Gänge 3/4, den 3. Gang anwählt.

Solche Fehler können durch Übertouren zu folgeschweren Schäden im Motor und im Getriebe führen.

Es ist deshalb Aufgabe der Erfindung, eine Gangschalteinrichtung nach dem Oberbegriff von Anspruch 1 oder 2 so weiterzuentwickeln, dass Fehlschaltungen infolge der Rückführung des Ganghebels in vorbestimmte Gassen vermieden werden, ohne dass höhere Anforderung an den Fahrer gestellt und die im Prinzip vorteilhafte Rückführung in vorbestimmte Gassen aufgegeben wird.

Diese Aufgabe wird mit den kennzeichnenden Merkmalen sowohl von Anspruch 1 wie auch von Anspruch 2 erfüllt.

Die Anordnung einer zusätzlichen Rastvorrichtung, z. B. in der Gasse der Gänge 5/6, zu der allgemein bekannten Gassenrückführung des Schalthebels in die Gasse der Gänge z. B. 3/4 sichert einmal diese Rückführung bei Schaltungen in den niederen Gang, z. B. den 5. Gang, während bei Schaltungen in den höheren Gang, z. B. den 6. Gang, die Gasse der Gänge 5/6 rastiert wird.

Bei der Verstellung des Schalthebels, z. B. vom 6. Gang in die Neutralstellung, wird die Gasse der Gänge 5/6 gehalten, so dass beim weiteren Schalten — z. B. Verstellen des Schalthebels in die Gangendstellung in Vorwärtsfahrtrichtung — der 5. Gang eingelegt wird. Erfolgt jedoch bei einer weiteren Rückschaltung die Verstellung des Schalthebels von der Gangendstellung des 5.

Ganges nach Neutral, wird die Rastierung für die Gasse 5/6 aufgehoben, und die Rückführung des Schalthebels erfolgt in die Gasse der Gänge 3/4. Fehlschaltungen, z. B. vom Gang 6 nach Gang 3, können so in einfacher Weise vermieden werden.

Mit den Ansprüchen 2 bis 9 ist die Erfindung in vorteilhafter Weise weiter ausgestaltet.

In vielen Gangschalteinrichtungen ist es zweckmässig, zwischen Schalthebel und den Schaltschienen noch eine zentrale Wähl- und Schaltwelle oder auch Drehwelle anzuordnen, die dann z. B. synchron mit dem Schalthebel in einer vorbestimmten Schaltgasse festgehalten oder in diese zurückgeführt wird. Dabei kann diese zentrale Wähl- und Schaltwelle sowohl als sogenannte Drehwelle — quer zu den Schaltschienen, die beim Wählen verschoben und beim Gangschalten gedreht wird — wie auch als Hauptschaltwelle — parallel zu den Schaltschienen mit einer drehenden Wählbewegung und einer Verschiebung beim Gangschalten — ausgeführt sein.

Die Anwendung der Rastvorrichtung bei einem Getriebe mit einer Drehwelle ist besonders zweckmässig, weil solche Getriebe für grössere Leistung ausgelegt sind und unzulässige Drehzahlerhöhungen mit absoluter Sicherheit verhindert werden müssen (Anspruch 2).

Werden als Halte- und Rückstellmittel in der Rastvorrichtung gemäss Anspruch 3 Federn angeordnet, so ist die Abstimmung besonders einfach möglich, denn es kommt bei einer solchen Gangeinrichtung neben einer sicheren Funktion auch auf die Leichtgängigkeit an.

Ist in entsprechenden Fahrzuständen, z. B. am Berg, auch einmal eine Rückschaltung von z. B. dem 6. in den 4. oder gar 3. Gang nötig, so ist das nach Anspruch 4 durch bewusste Überdrückung der Federschwellen auch möglich. Die Rastvorrichtung trägt also nicht nur zu einer erheblichen Schalterleichterung bei, sondern führt auch zur Sicherheit und zur guten Schaltbarkeit eines solchen Getriebes. Ist eine Überdrückung der Rastvorrichtung nicht gewünscht, so kann durch die Ausgestaltung der Federvorspannung oder durch andere Sperrmittel die Rastvorrichtung auch starr ausgeführt werden.

Bei allen Getriebeanordnungen, bei denen der 6. Gang auf der zentralen Wähl- und Schaltwelle infolge der Umlenkung durch den Schalthebel vorne liegt, z. B. bei einer Berggangausführung, bei der der 6. Gang der direkte Gang ist, kann in einfacher Weise die Rastvorrichtung an der Schaltschiene der Gänge 5/6 angeordnet werden, weil die zentrale Wähl- und Schaltwelle und die Schaltschienen der Gänge 5/6 bei einer Gangschaltung in die Gänge 5 und 6 synchron, axial verschoben werden.

Ist der 6. Gang jedoch ein Schnellgang und liegt so, dass nur über eine Umlenkung das übliche und auch gewohnte Schaltbild erzielt werden kann, ist es eventuell nötig, parallel zur Schaltschiene 5/6 eine gesonderte Rastenschiene anzuordnen, die über einen Mitnehmer, der nur in der Wählstellung Gasse 5/6 wirkt, eine synchrone Bewegung mit der zentralen Wähl- und Schaltwelle sichert (Anspruch 5). In der Ausgestaltung der Erfindung nach Anspruch 6 wird eine sehr zuverlässig wirkende Gassenrastierung erzielt.

Weitere Ausführungsbeispiele, die je nach Ausführung der Schaltanlage für ein Getriebe besonders einfach und vorteilhaft sind, werden im Anspruch 7 für eine Gangschalteinrichtung nach Anspruch 1 und im Anspruch 8 und 9 für eine nach dem Anspruch 2 dargestellt, so kann in beiden Ausführungsbeispielen die Rastvorrichtung in einfacher Weise am Getriebe bzw. am Schaltgehäuse angeordnet sein oder im ersten Ausführungsbeispiel in ein anderes Schaltungsteil, z. B. den Mitnehmer, für ein anderes Gangpaar integriert werden.

Beim Vertauschen der Gänge in bezug auf deren Anordnung im Schaltbild ist keine zusätzliche Schiene und/oder Umlenkung nötig, sondern es muss nur die Schieberplatte ausgetauscht werden. Beim gewollten Überdrücken des Sperrschiebers treten keine axialen Komponenten auf die Schaltwelle auf, weil nur geschwenkt wird, und der Doppelschaltfinger wird für mehrere Funktionen genutzt.

Beim letzten Ausführungsbeispiel, wo die Rastvorrichtung auf der Drehwelle angeordnet ist, muss bei einer eventuell notwendigen Änderung des Wählbildes oder einer vertauschten Anordnung der Gänge nur der Sperrhebel verdreht montiert oder eine andere Schaltwelle eingebaut werden. Besonders günstig ist auch die Anordnung des Sperrhebels zwischen zwei Gehäusen bzw. einem Gehäuse und einem Gehäusedeckel — Schaltgehäuse, Rastgehäuse, Deckel — und die Reibungsarme schwenkende Anordnung sowie die einfache Formgebung des Rasthebels, dessen Herstellung als Stanzteil möglich macht.

Weitere Einzelheiten der Erfindung und deren Ausgestaltung werden anhand von Ausführungsbeispielen und anhand von Zeichnungen erläutert.

Es zeigen:

Fig. 1 ein H-ähnliches Gangschaltbild für ein 6-Gang-Getriebe,

Fig. 2 ein Kraftgebirge für das Schaltbild nach Fig. 1,

Fig. 3 einen Querschnitt durch eine Gangschalteinrichtung im Bereich der Rastvorrichtung eines ersten Beispieles,

Fig. 4 einen Längsschnitt nach Fig. 3 mit der angewählten Stellung Neutral der Gasse 5/6 — Gasse 5/6 nicht gerastet,

Fig. 5 Darstellung nach Fig. 4, jedoch 6. Gang geschaltet und Gasse 5/6 gerastet,

Fig. 6 Darstellung nach Fig. 4, Schaltung von Gang 6 nach Neutral und gerastete Gasse 5/6,

Fig. 7 Darstellung nach Fig. 4 5. Gang geschaltet und Gasse 5/6 nicht gerastet,

Fig. 8 ein Schnitt VIII-VIII nach Fig. 7,

Fig. 9 eine weitere Gangschalteinrichtung mit Sperrschieber und Schieberplatte in Verbindung mit Schaltfingern an der Hauptschaltwelle und im Schnitt dargestellt,

Fig. 9A eine Gangschalteinrichtung nach Fig. 9 in Draufsicht,

Fig. 10/10A eine Schalteinrichtung nach den Fig. 9+9A, jedoch in der Stellung 6. Gang geschaltet,

Fig. 11/11A eine Schalteinrichtung nach den Fig. 9+9A in der Stellung Neutral mit gesperrter Gassenrückführung,

Fig. 12 eine Gangschalteinrichtung mit einer Rastvorrichtung mit Rasthebel auf einer Drehwelle,

Fig. 13 bis 16 mehrere Querschnitte durch die Rastvorrichtung nach Fig. 12 im Bereich des Rasthebels mit den Stellungen:

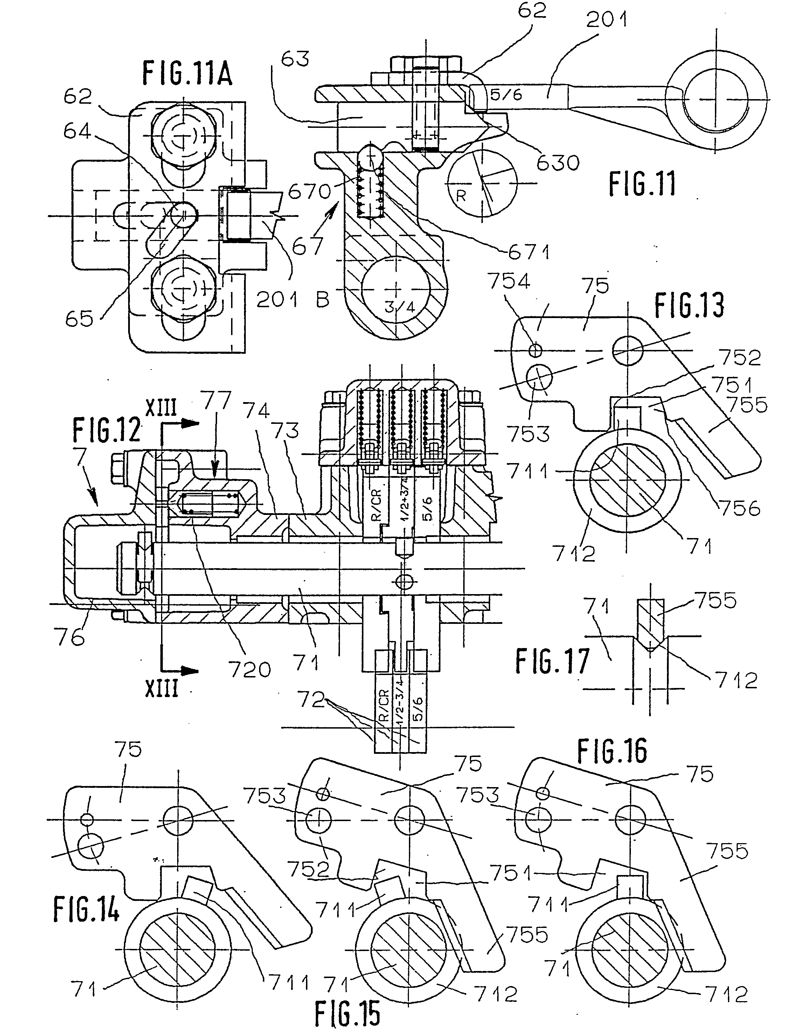

Fig. 13 Stellung: Neutral, z. B. der Gasse 5/6 von der tieferen Gasse aus gewählt oder vom tieferen Gang aus geschaltet,

Fig. 14 Stellung: der tiefere Gang ist geschaltet,

Fig. 15 Stellung: der höhere Gang ist geschaltet,

Fig. 16 Stellung: Neutral, vom höheren Gang aus zurückgeschaltet,

Fig. 17 ein Schnitt durch den Finger des Rasthebels im Bereich der Rille in der Drehwelle.

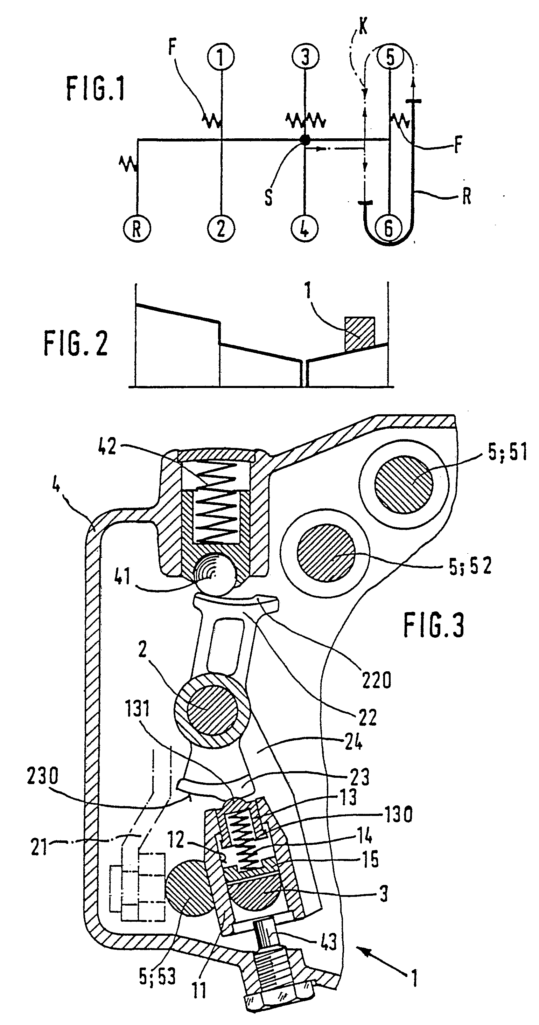

Das Schaltbild für ein 6-Gang-Getriebe nach Fig. 1 ist, wie allgemein üblich, mit der Anordnung der Gänge 1/3/5 in Vorwärts- und der Gänge R/2/4/6 in Rückwärtsfahrtrichtung. Wobei sich dieses Schaltbild am Getriebe selbst, also z. B. an der zentralen Wähl- und Gangschaltwelle, infolge der Lagerung des Gangschalthebels umkehrt. Mit S ist der Schalthebel in der Ruhe- und Neutralstellung der Gasse der Gänge 3/4 bezeichnet. Wird der Schalthebel S in Richtung auf die Gasse der Gänge 5/6 und in dieser Gasse nach dem Kurvenverlauf K bewegt, so erfolgt keine Rastierung dieser Gasse, während bei der Bewegung nach dem Kurvenverlauf R die Rastierung erfolgt. D. h., dass bei einer Bewegung des Schalthebels von Neutral Gasse 3/4 nach Neutral Gasse 5/6 und bis in die Gangendstellung des Ganges 5 und wieder nach Neutral Gasse 5/6 die Rückführung des Gangschalthebels in die Gasse 3/4 immer dann erfolgt, wenn der 5. Gang nicht eingelegt ist und auf den Schalthebel kein Schaltdruck ausgeübt wird. Erst bei einer Bewegung des Schalthebels von Neutral Gasse 5/6 zum Gang 6 hin, wird auf etwa dem halben Weg eine Rastvorrichtung aktiviert, die den Schalthebel und auch die Schaltwelle in der Gasse 5/6 festhält, also eine Rückführung in die Gasse 3/4 verhindert. Das geschieht auch noch, wenn der Schalthebel vom Gang 6 in Richtung auf Neutral zu bewegt wird. Erst bei einer weiteren Bewegung, z. B. im Verlauf einer Rückschaltung auf den Gang 5 zu, wird diese Rastierung etwa auf dem halben Wege von Neutral zum Gang 5 wieder aufgehoben, so dass ab diesem Punkt wieder eine Rückführung des Schalthebels in die Gasse 3/4 erfolgt.

Die in der Neutralstellung in den einzelnen Gassen wirkenden Rückstellkräfte sind schematisch in Form von Federn F im Gangschaltbild dargestellt.

Fig. 2 zeigt das Kraftgebirge zum Schaltbild nach Fig. 1. Wie leicht zu erkennen ist, strebt der Gangschalthebel in einer nicht geschalteten Lage immer zur Gasse 3/4 und nimmt dort die Ruhestellung in der Neutrallage ein, wenn die Rückführung aus der Gasse 5/6 nicht durch die Rastvorrichtung

1, 6 oder 7 in der beschriebenen Weise verhindert wird.

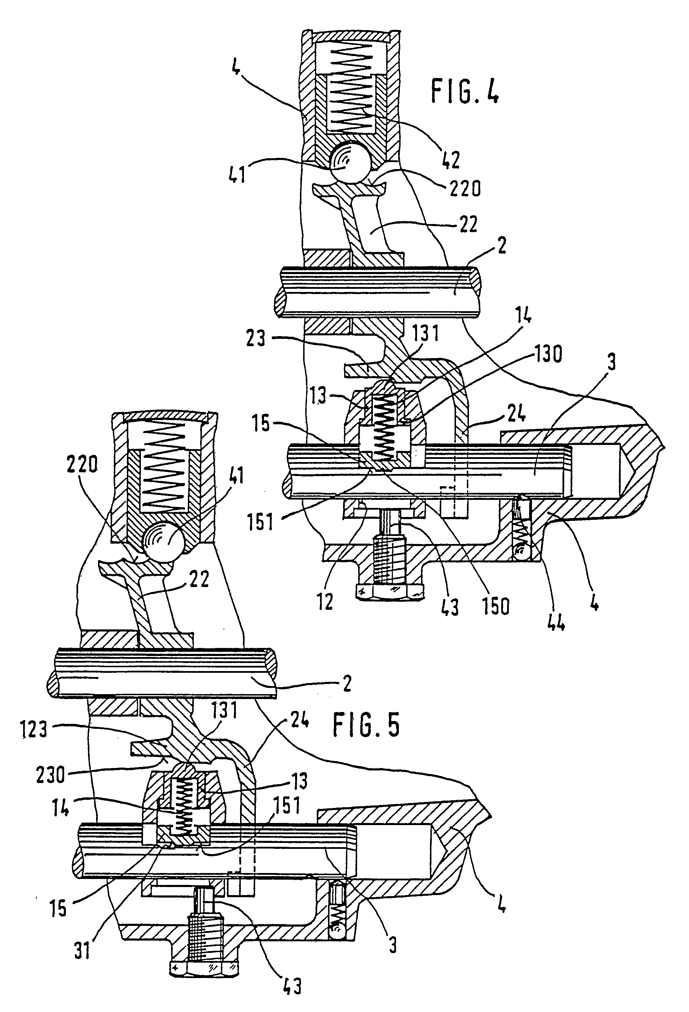

Wie in Fig. 3 und 4 zu ersehen, ist neben den nicht dargestellten Übertragungshebeln auf der zentralen Wähl- und Schaltwelle 2, die in die Schaltwellen oder Schaltschienen 5 der Gänge R; 1/2; 3/4; 5 und 6 durch Drehen dieser Wähl- und Schaltwelle 2 direkt oder über Umlenkhebel 21 eingreifbar sind, noch eine Schaltraste 22, Gassenraste 23 und ein Mitnehmer 24 dreh- und verschiebefest angeordnet. Eine im Getriebegehäuse 4 gelagerte Kugel 41 wird von einer Druckfeder 42 gegen die Rastenbahn 220 der Schaltraste 22 gedrückt und auf der parallel zur Schaltschiene 5 der Gänge 5/6 liegenden Rastenschiene 3 ist noch die Rastvorrichtung 1 angeordnet, die mit der Gassenraste 23 und einem im Getriebegehäuse 4 befestigten Anschlagbolzen 43 zusammenarbeitet. Die Rastvorrichtung 1 selbst besteht aus einem auf der Rastenschiene 3 drehfest und axial verschiebbar angeordneten Gehäuse 11 mit einer quer zur Rastenschiene 3 eingearbeiteten und 2fach abgesetzten Bohrung 12. Eine an der Stirnseite kugelförmig ausgebildete Büchse 13 wird von einer Druckfeder 14 radial nach aussen gedrückt und mit einem Bund 130 im ersten Absatz der Bohrung 12 gehalten, so dass zwischen der kugeligen Anformung 131 am Boden der Büchse und der Gassenraste 23 noch ein Spalt ist. Die Druckfeder 13 stützt sich radial innen an einer zweiten Büchse 15 ab, die an einem nach aussen gerichteten Boden 150 eine Steuerkurve 151 aufweist, welche mit einer Steuerkurve 31 auf der Rastenschiene zusammenwirkt. Im Bereich des zweiten Absatzes der Bohrung 12 wirkt noch der am Getriebegehäuse 4 befestigte Anschlagbolzen 43 und die Rastenschiene 3 wird über eine gleichfalls im Getriebegehäuse 4 angeordnete Federraste 44 in der Neutralstellung, also zwischen dem 5. und dem 6. Gang gehalten.

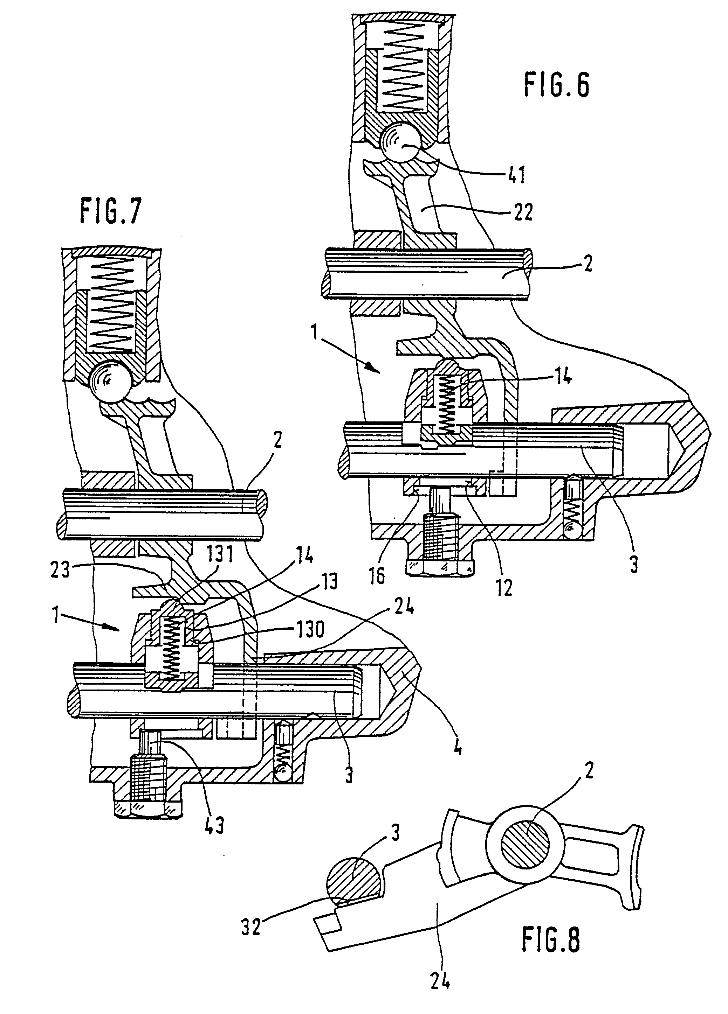

Die Fig. 5, 6 und 7 entsprechen der Fig. 4, haben jedoch eine jeweils andere Schaltstellung. Die Fig. 8 zeigt den Eingriff des Mitnehmers 24 in einer Nut 32 der Rastenschiene 3, wenn die zentrale Wähl- und Schaltwelle 2 in der Stellung, die der Gasse der Gänge 5/6 entspricht, geschwenkt ist.

Die Rasteinrichtung wirkt wie folgt:

In der Stellung der Fig. 4 befindet sich der Gangschalthebel und damit die zentrale Wähl- und Schaltwelle 2 und auch die Rastenschiene 3 in der Neutralstellung der Gasse 5/6. Zwischen der Schaltraste 23 und der kugeligen Anformung 131 der Büchse 13 ist Spiel. Der Mitnehmer ist in die Nut 32 der Rastenschiene 3 (Fig. 8) eingetaucht. In dieser Stellung wirkt die Rastvorrichtung nicht und der Schalthebel und die zentrale Wähl- und Schaltwelle 2 wird, wenn kein Schaltdruck aufgebracht wird, in die Neutral- und Urstellung der Gasse 3/4 zurückgeführt (Fig. 1, 2). In Fig. 5 ist die zentrale Wähl- und Schaltwelle 2 nach links bewegt und der 6. Gang ist eingelegt. Der Mitnehmer 24 hat die Rastenschiene 3 um den gleichen Betrag mit bewegt, wobei die Rastvorrichtung 1 etwa auf der Hälfte dieser Strecke vom Anschlagbolzen 43 festgehalten worden ist. Durch die Relativbewegungen der Rastenschiene zur Rastvorrichtung ist die Feder 14 über die Steuerkurven 31, 151 und die zweite Büchse 15 aktiviert worden, wobei gleichzeitig über die kugelige Anformung 131 die Büchse 13 über die Steuerkurve 230 von der gefesselten Stellung abgehoben worden ist. An der Schaltraste 22 herrscht nun Gleichgewicht und der Schalthebel bleibt in dieser Stellung mit dem eingelegten Gang 6 stehen und gleichzeitig ist die Rastierung für die Gasse 5/6 erzielt, so dass bei einer Bewegung des Schalthebels in Richtung auf Neutral zu dieser in der Gasse 5/6 gehalten wird. Die Fig. 6 zeigt diese Schaltstellung. Die zentrale Wähl- und Schaltwelle 2 und synchron dazu die Rastschiene 3 und die Rastvorrichtung ist nach rechts bewegt und wird von der Kugel 41 in Verbindung mit der Schaltraste 22 in der Neutralstellung gehalten. Eine Rückführung des Schalthebels in die Neutralstellung der Gasse 3/4 erfolgt nicht, weil die Rastvorrichtung 1 noch wirkt. – Die Druckfeder 14 ist noch aktiviert.

Wird die Schaltbewegung über die Stellung «Neutral» hinaus in Richtung auf den 5. Gang zu weitergeführt, so bleibt die Rastierung so lange aufrechterhalten, bis die Rastvorrichtung 1 am Anschlag 16 der abgesetzten Bohrung 12 über den am Getriebegehäuse 4 befestigten Anschlagbolzen 43 am Verschieben gehindert wird. – Halber Schaltweg von Neutral nach Gang 5. Da die zentrale Wähl- und Schaltwelle 2 und die Rastenschiene 3 über den Mitnehmer 24 bis zu in Fig. 7 dargestellter Schaltstellung, die dem eingelegten 5. Gang entspricht, weitergeführt wird, erfolgt die Entspannung der Feder 14. Die Büchse 13 wird am Bund 130 gehalten, und zwischen der kugeligen Anformung 131 der Büchse 13 und der Gassenraste 23 ist, wie in Fig. 4 bereits beschrieben, Spiel. Das Kräftegleichgewicht an der Schaltraste ist aufgehoben, und die zentrale Wähl- und Schaltwelle 2 und der Schalthebel werden in die Gasse 3/4 zurückgeführt, wenn nunmehr der Schalthebel in die Neutralstellung nach Fig. 4 verstellt wird.

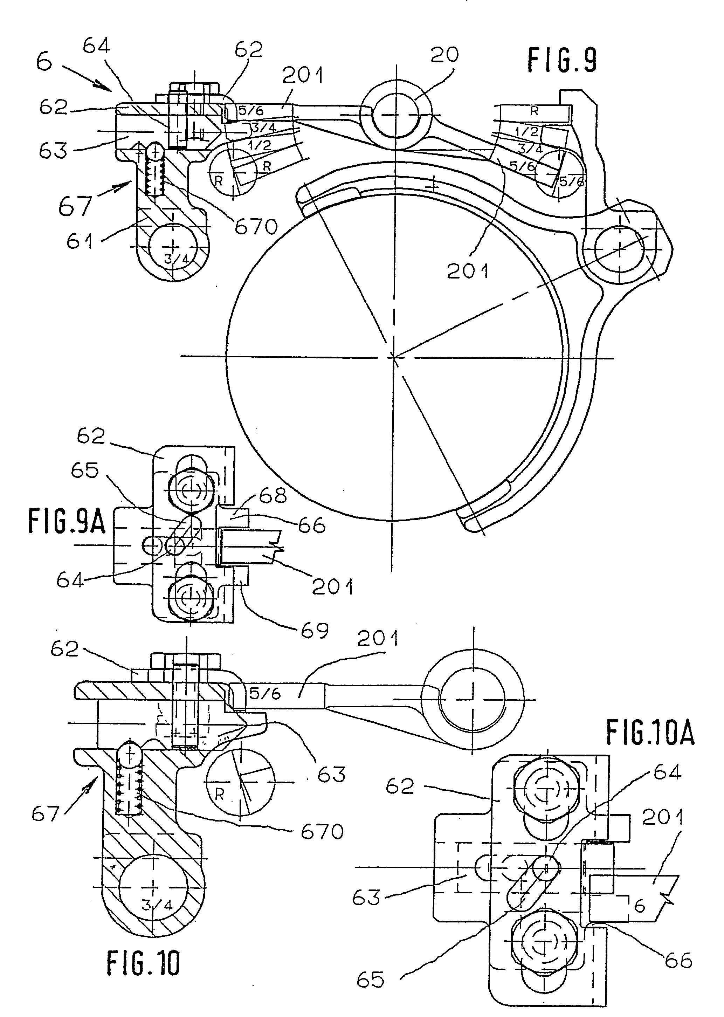

Eine weitere Gangschalteinrichtung mit einer Rastvorrichtung 6 ist in den Fig. 9 bis 11A dargestellt, die in Verbindung mit einem Schaltfinger 201 zusammenwirkt, der an der Hauptschaltwelle 20 befestigt ist. Dabei ist es möglich, die Rastvorrichtung 6 am Getriebe oder Schaltgehäuse oder, wie dargestellt, an einer Schaltschiene zu befestigen. Die gezeichneten acht Schaltstellungen werden von einem Doppelschaltfinger 201 eingenommen und entsprechend den Gassen 5/6 – stark gezeichnet – 3/4; 1/2 sowie dem R-Gang. Der Doppelschaltfinger bewirkt sowohl die Verschiebung der Schaltschienen zum Gangschalten, die Blockierung der nicht an der Schaltung beteiligten Schaltschienen und noch die Rastierung, z. B. der Gasse der Gänge 5, 6.

Die Rastvorrichtung 6 selbst besteht aus dem Gehäuse 61, der Schieberplatte 62, dem Sperrschieber 63 und dem mit dem Sperrschieber verbundenen Stift 64, der über eine schräge Ausnehmung 65 in der Schieberplatte bewegt wird und damit den Sperrschieber 63 verstellt. Die Schieberplatte hat noch eine Aussparung 66, in die der Schaltfinger 201 nur in der Gassenstellung der Gänge 5/6 so eingreift, dass beim Verschieben des Schaltfingers in den tieferen Gang der Gasse, z. B. den 5. Gang, die Schieberplatte nicht verstellt und beim Verschieben in den höheren Gang, z. B. den 6. Gang, die Schieberplatte 62 etwa um den gleichen Betrag und in die gleiche Richtung verstellt wird. Für die Rastierung der Endstellungen des Sperrschiebers 63 ist noch eine Rasteinrichtung 67 angeordnet. Je ein Nocken 68 und 69 verhindert ein Drehen der Hauptschaltwelle 20 bei einem geschalteten 5. oder 6. Gang.

Die Rastvorrichtung 6 nach den Fig. 9 bis 11A wirkt wie folgt:

Nach Fig. 9 ist die Hauptschaltwelle 20 und der Doppelschaltfinger 201 in der stark gezeichneten Lage und greift damit in die Schaltschiene der Gänge 5/6 auf der einen Seite und in den Wirkbereich der Rastvorrichtung 6 auf der anderen Seite ein und befindet sich in der Gasse der Gänge 5/6 in der Neutrallage.

Beim Schalten in den niederen Gang der Gasse, in diesem Beispiel in den 5. Gang, wird die Hauptwelle 20 und über den Doppelschaltfinger 201 auch die Schaltschiene 5/6 verschoben. Da die Aussparung 66 der Schieberplatte 62 in dieser Schaltrichtung (nach oben in Fig. 9A) gross ist, wird die Rastvorrichtung nicht aktiviert, und bei einer Rückschaltung in Neutral wird der Schalthebel und die Hauptschaltwelle 20 in z. B. die Gasse der Gänge 3/4 zurückgeführt.

Wird aus der gleichen Ausgangslage nach Fig. 9 und 9A jedoch in den höheren Gang, also in den 6. Gang, geschaltet, so ergibt sich eine Stellung des Schaltfingers 201 der Schieberplatte 62 und des Sperrschiebers 63 nach den Fig. 10 und 10A.

Der Schaltfinger 201A hat über die untere Begrenzung der Aussparung 66 die Schieberplatte 62 (Fig. 10A) verschoben und damit über die schräge Ausnehmung 65 den Stift 64 und damit den Sperrschieber 63 in Sperrstellung gebracht, wobei der Sperrschieber 63 in dieser Stellung von der Rasteinrichtung 67 (Fig. 10) gehalten wird.

Bei einer Bewegung des Schalthebels vom 6. Gang in die Neutrallage dieser Gasse wirkt der Sperrschieber 63 weiter, wie die Fig. 11 und 11A zeigen, und der Schalthebel wird in dieser Gasse gehalten, weil infolge der Grösse der Aussparung 66 an der Schieberplatte 62 und der Wirkung der Rasteneinrichtung 67 die Schieberplatte 62 nicht verschoben wird. In dieser Lage ist es jedoch auch möglich, durch Aufbringung einer entsprechenden Wählkraft in Richtung der Gasse der Gänge 3/4 die Sperre zu überdrücken und, wenn nötig, in die Gänge 4 und auch 3 zu schalten. Dabei wirkt vom Schaltfinger 201B durch Schwenken der Hauptschaltwelle 20 eine Kraft auf die Schräge 630 des Sperrschiebers 63 und die Feder 670 der Rasteinrichtung 67 wird über die Kugel 671 überdrückt und der Sperrschieber 63 aus der Sperrstellung bewegt. Im Normalfall erfolgt jedoch eine Rückschaltung vom 6. in den 5. Gang, so dass die Schieberplatte 62 vom Schaltfinger 201B verschoben wird und die schräge Ausnehmung 65 über den Stift 64 den Sperrschieber 63 entsperrt.

Nach einer Schaltung vom 5. Gang in die Neutrallage erfolgt eine Rückführung des Schalthebels, wie allgemein bekannt, in die Gasse 3/4.

Die Figur 12 zeigt eine Gangschalteinrichtung, bei der die Rastvorrichtung 7 an der quer zur Getriebewelle und den Schaltschienen 72 angeordneten Schalt- oder Drehwelle 71 angebracht ist. Die an und für sich vorhandene Drehwelle 71 ist nur verlängert und erhält einen Mitnehmer 711 und in der gleichen Ebene XIII-XIII eine Rille 712. Sie kann in einem an das Schaltgehäuse 73 angeflanschten Rastgehäuse 74 zusätzlich gelagert werden. Zwischen diesem Rastgehäuse 74 und einem stirnseitigen Deckel 76 ist ein Rasthebel 75 schwenkbar gelagert, der in zwei Stellungen durch eine Rasteinrichtung 77 gehalten werden kann. Der Rasthebel 75 hat eine so grosse Aussparung 751, dass bei einer Schaltung in den tieferen Gang der Mitnehmer 711, der sich dabei in Umfangsrichtung bewegt, nicht zur Anlage kommt (Fig. 14). Bei einer Schaltung in den höheren Gang hingegen wird der Rasthebel 75 am Anschlag 752 mitgenommen (gedreht) und von der Rasteinrichtung 77 in einer Bohrung 753 mit einer kräftigeren Rastwirkung rastiert (Fig. 15). Dabei greift der Finger 755 des Rasthebels 75 in die Rille 712 der Drehwelle 71 ein und hält diese in dieser Ebene fest. Nach Rückschaltung vom höheren Gang (z. B. dem 6. Gang) in dieser Gasse in die Neutrallage verbleibt infolge der Rastierung der Rasthebel in der bisherigen Stellung und verhindert so die an und für sich vorgesehene Rückführung der Drehwelle in die Ebene der Gasse 3/4 (Fig. 16). Nur durch die Aufbringung einer hohen Wählkraft kann die Rasteinrichtung 77 überdrückt werden, und der Finger 755 wird über die Flanken der Rille 712 aus dieser herausgedrückt – Zwangsrückschaltung.

Im Normalfall hingegen wird erst bei einer weiteren Rückschaltung, z. B. in den 5. Gang, über den Mitnehmer 711 der Rasthebel 75 am Anschlag 756 zurück in seine Ausgangslage gedrückt. Damit wird die Gassensperre aufgehoben und die Stellung der Fig. 13 wieder erreicht.

*Bezugszeichen*

| F | Federn |
|---|---|
| K | Schaltweg ohne Rastierung |
| R | Schaltung mit Rastierung in der Gasse 5/6 |
| S | Schalthebel |
| 1 | Rastvorrichtung |
| 11 | Gehäuse |
| 12 | Abgesetzte Bohrung |
| 13 | Büchse |
| 130 | Bund |
| 131 | Kugelige Anformung |
| 14 | Druckfeder |
| 15 | Zweite Büchse |
| 150 | Boden |
| 151 | Steuerkurve |
| 16 | Anschlag |
| 2, 20 | Zentrale Wähl- und Schaltwelle; Hauptschaltwelle |
| 21 | Umlenkhebel |

| 22 | Schaltraste |
|----|-------------|
| 201 | Doppelschaltfinger |
| 220 | Rastenbahn |
| 23 | Gassenraste |
| 230 | Steuerkurve |
| 24 | Mitnehmer |
| 3 | Rastenschiene |
| 31 | Steuerkur |
| 32 | Nut |
| 4 | Getriebegehäuse |
| 41 | Kugel |
| 42 | Druckfeder |
| 43 | Anschlagbolzen |
| 44 | Federraste |
| 5 | Schaltschienen |
| 51 | Schaltschiene der Gänge 1/2 |
| 52 | Schaltschiene der Gänge 3/4 |
| 53 | Schaltschiene der Gänge 5/6 |
| 6 | Rastvorrichtung |
| 61 | Gehäuse |
| 62 | Schieberplatte |
| 63 | Sperrschieber |
| 64 | Stift |
| 65 | Schräge Ausnehmung |
| 66 | Aussparung |
| 67 | Rasteinrichtung |
| 68 | Nocken |
| 69 | Nocken |
| 630 | Schräge |
| 670 | Feder |
| 671 | Kugel |
| 7 | Rastvorrichtung |
| 71 | Schalt- oder Drehwelle |
| 72 | Schaltschiene |
| 73 | Schaltgehäuse |
| 74 | Rastgehäuse |
| 75 | Rasthebel |
| 76 | Deckel |
| 77 | Rasteinrichtung |
| 770 | Feder |
| 711 | Mitnehmer |
| 712 | Rille |
| 751 | Aussparung |
| 752 | Anschlag |
| 753 | Grosse Bohrung |
| 754 | Kleine Bohrung |
| 755 | Finger |
| 756 | Anschlag |

## Patentansprüche

1. Gangschalteinrichtung für ein mehrgängiges, vorrangig ein 6-Gang-Kraftfahrzeug-Wechselgetriebe, mit einem Schalthebel (S) zum Wählen und Schalten aller Gänge mit Schaltschienen (5, 52, 72) zum Schalten von Gängen einer Gasse mit einem dem 4-Gang-Getriebe ähnlichen H-förmigen Schaltbild und mit Einrichtungen zum Festhalten oder Rückführen des Schalthebels (S) in vorbestimmte Schaltgassen (3/4), dadurch gekennzeichnet, dass für eine einer vorbestimmten Schaltgasse (3/4) benachbarte Gasse z. B. der Gänge 5/6 eine Rastvorrichtung (1, 6) angeordnet ist, die

— bei einer erfolgten oder nahezu erfolgten Schaltung in den höheren Gang dieser Gasse, z. B. den 6. Gang, den Schalthebel (S) in dieser Gasse festhält und

— bei einer erfolgten oder nahezu erfolgten Schaltung in den niedrigen Gang dieser Gasse, z. B. den 5. Gang, die Rückstellung des Schalthebels (S) in eine tiefere Gasse, z. B. die Gasse der Gänge 3/4, zulässt,

wenn der Schalthebel (S) wieder in die Neutralstellung bewegt wird.

2. Gangschalteinrichtung nach dem Oberbegriff von Anspruch 1 und einer zwischen dem Schalthebel (S) und den Schaltschienen (72) angeordneten zentralen Wähl- und Schaltwelle oder auch Drehwelle (2, 71), die mit dem Schalthebel festgehalten oder in vorbestimmte Gassen zurückgeführt wird, dadurch gekennzeichnet, dass für eine einer vorbestimmten Schaltgasse (3/4) benachbarte Gasse, z. B. der Gänge 5/6, eine Rastvorrichtung (1, 7) angeordnet ist, die

— bei einer erfolgten oder nahezu erfolgten Schaltung in den höheren Gang dieser Gasse, z. B. den 6. Gang, die zentrale Wähl- und Schaltwelle oder auch Drehwelle (2, 71) und den Schalthebel (S) in dieser Gasse festhält und

— bei einer erfolgten oder nahezu erfolgten Schaltung in den niedrigeren Gang dieser Gasse, z. B. den 5. Gang, die Rückstellung der zentralen Wähl- und Schaltwelle oder Drehwelle (2, 71) und des Schalthebels (S) in eine tiefere Gasse, z. B. die Gasse der Gänge 3/4, zulässt, wenn der Schalthebel (S) wieder in die Neutralstellung bewegt wird.

3. Gangschalteinrichtung nach Anspruch 1 oder 2, dadurch gekennzeichnet, dass in dieser Rastvorrichtung (1) oder Rasteinrichtung (67, 77) Federn (14, 670, 770) als Rückstell- und/oder Haltemittel angeordnet sind.

4. Gangschalteinrichtung nach Anspruch 3, dadurch gekennzeichnet, dass die Federn (14, 670, 770) der Rastvorrichtung (1) oder Rasteinrichtung (67, 77) mit einer relativ hohen Wählkraft überdrückt werden können.

5. Gangschalteinrichtung nach einem der vorgenannten Ansprüche, dadurch gekennzeichnet, dass die Rastvorrichtung (1) auf einer Schaltschiene (5) oder auf einer mit der zentralen Wähl- und Schaltwelle (2) synchron verschiebbaren Rastenschiene (3) angeordnet ist.

6. Gangschalteinrichtung nach Anspruch 5, dadurch gekennzeichnet, dass die Rastvorrichtung (1) aus einem Gehäuse (11) mit einer quer zur Rastenschiene (3) angeordneten zweimal abgesetzten Bohrung (12), in der zwei Büchsen (13, 15) mit einer dazwischenliegenden Druckfeder (14) angeordnet sind, wobei die erste Büchse (13) am nach aussen gerichteten Boden kugelförmig angeformt (131) ist und mit einer Steuerkurve (230) an der Gassenraste (23) zusammenwirkt und zur Aktivierung der Rastvorrichtung (1) von dieser zurückgedrückt wird, dass die zweite Büchse (15) am äusseren Boden (150) eine Steuerkurve (151) aufweist, die mit einer zugeordneten Steuerkurve (31) der Rastenschiene (3) zusammenwirkt und über die Druckfeder (14) aktiviert wird, dass die Relativbewegung zwischen Rastvorrichtung (1) einerseits und der zentralen Wähl- und Schaltwelle (2) sowie Rastenschiene (3) andererseits einen im Getriebegehäuse (4) fest angeordneten Anschlagbolzen (43) durch Festhalten der Rastvorrichtung (1) etwa auf dem halben Wege von der Neutralstellung zu den beiden Endstellungen der Gasse 5/6 bewirkt wird und dass durch diese Relativbewegung sowohl eine Aktivierung wie auch die Entspannung der Rastvorrichtung (1) erfolgt und dass die synchrone axiale Bewegung der zentralen Wähl- und Schaltwelle (2) und der Rastenschiene (3) über einen auf der zentralen Wähl- und Schaltwelle angeordneten Mitnehmer (24) bewirkt wird.

7. Gangschalteinrichtung nach Anspruch 1, dadurch gekennzeichnet, dass ein Doppelschaltfinger (201, 201A, 201B), der an einer Hauptschaltwelle (20) befestigt ist, mit einer Rastvorrichtung (6) zusammenwirkt, wobei dieser in eine Aussparung (66) einer Schieberplatte (62) eingreift, die so gestaltet ist, dass bei einer Schaltung in den niederen Gang einer Gasse die Schieberplatte 62 nicht verschoben wird und bei einer Schaltung in den höheren Gang dieser Gasse der Doppelschaltfinger die Schieberplatte (62) in gleicher Richtung verschiebt, dass eine schräge Ausnehmung (65) dieser Schieberplatte einen Sperrschieber (63) über einen in diesem angeordneten Stift (64) verschiebt, wobei dieser in der gleichen Ebene, jedoch in der Bewegungsrichtung um 90° versetzt, zum Doppelschaltfinger und der Schieberplatte angeordnet ist, dass in dieser Sperrstellung, wie auch in der Ausgangsstellung, der Sperrschieber (63) von einer mit einer Feder (670) versehenen Rasteinrichtung (67) gehalten wird, dass der Sperrschieber (63) die Rückführung des Schalthebels in eine tiefere Gasse bei Rückschaltung in die Neutrallage verhindert, nur unter Aufbringung einer hohen Wählkraft überdrückbar ist und erst während der Schaltung in den tieferen Gang dieser Gasse über die Aussparung (66) und die schräge Ausnehmung (65) der Schieberplatte (62) und den Stift (64) der Sperrschieber in die entsperrte Stellung bewegt wird, so dass der Gangschalthebel beim Schalten in die Neutrallage dieser Gasse in die nächsttiefere zurückgeführt wird.

8. Gangschalteinrichtung nach Anspruch 2, dadurch gekennzeichnet, dass auf einer verlängerten Schalt- oder Drehwelle (71) eine Rastvorrichtung (7) mit einer Rille (722) und einem Mitnehmer (711) auf der Drehwelle (71) und ein schwenkbarer Rasthebel (75), der in der Raststellung in die Rille (712) eingreift, angeordnet ist.

9. Gangschalteinrichtung nach Anspruch 8, dadurch gekennzeichnet, dass der Rasthebel (75) in einem an einem Schaltgehäuse (73) angeflanschten Rastgehäuse (74) gelagert ist, eine Aussparung (751) hat, die mit dem Mitnehmer (711) auf der Drehwelle (71) zusammenarbeitet, einen Finger (755) hat, der in Sperrstellung in die Rille (712) der Drehwelle (71) eingreift, und zwei Bohrungen (753, 754) aufweist, in die eine Rasteinrichtung (77) wahlweise eingreift und wobei dieser in einer quer zur Drehwelle (71) liegenden Ebene vorrangig zwischen Rastgehäuse (74) und einem stirnseitigen Deckel (76) angeordnet ist.

## Claims

1. Gearshift device for a multi-speed, primarily 6-speed, gear-change transmission for motor vehicles, having a gear shift lever (S) for selecting and shifting all gears with shift rails (5, 52, 72) for shifting gears within each shift path, in which the shift pattern is similar to the H-shaped pattern used in a 4-speed transmission, and has devices to retain the shift lever (S) in or return it to predetermined shift gates (3/4), characterized in that a path lying next to the predetermined shift path (3/4), e. g. the one for 5th and 6th gears, is provided with a detent device (1, 6) which
— retains the shift lever (S) in this path when a shift into the upper gear in this path, e. g. to 6th gear, has been completed or almost completed, and
— permits the return of the shift lever (S) to a lower path, e. g. the path for the 3rd and 4th gears, when a shift into the lower gear of the former path, e. g. to 5th gear, has been completed or almost completed,
whenever the shift lever (S) is again moved into the neutral position.

2. Gearshift device in accordance with the overall concept of Claim 1, with a central selector/gear-change shaft or rotating shaft (2, 71), which is arranged between the shift lever (S) and the shift rails (72) and is held in position and moved into predetermined paths by means of the shift lever, characterized in that a path lying next to the predetermined shift path (3/4), e. g. the one for 5th and 6th gears, is provided with a detent device (1, 7) which
— retains the central selector/gear-change shaft or rotating shaft (2, 71) and shift lever (S) in this path when a shift into the upper gear in this path, e. g. to 6th gear has been completed or almost completed, and
— permits the return of the central selector/gear-change shaft or rotating shaft (2, 71) to a lower path, e. g. the path for 3rd and 4th gears, whenever the shift lever (S) is again moved to the neutral position.

3. Gearshift device according to Claim 1 or 2, characterized in that springs (14, 670, 770) are provided in this detent device (1) or detent devices (67, 77) for returning and retaining purposes.

4. Gearshift device according to Claim 3, characterized in that the springs (14, 670, 770) of detent device (1) or detent devices (67, 77) can be overcome by a relatively high selection effort.

5. Gearshift device according to one of the claims above, characterized in that the detent device (1) is arranged on a shift rail (5) or on a detent rail (3) which can slide synchronously with the central selector/gear-change shaft (2).

6. Gearshift device according to Claim 5, characterized in that the detent device (1) consists of a housing (11) with a two-step bore (12) in which two bushings (13, 15) are fitted to either end of a compression spring (14), such that the first bushing (13) has a spherical projection (131) on its external face and acts together with a cam (230) on the path detent (23), by means of which it is depressed to operate the detent device (1), that the second bushing (15) has a control cam (151) on its external face (150) which operates together with a subordinated cam (31) on the detent rail (3) and is actuated by the compression spring (14), that the relative movement between the detent device (1) on the one hand and the central selector/gear-change shaft (2) and detent rail (3) on the other is made possible by a stop pin (43) rigidly fastened to the transmission case (4) which retains the detent device (1) approximately half-way between the neutral position and the two end positions of path 5/6, and that both actuation and relaxation of the detent device (1) are carried out by this relative movement, while the synchronous axial movement of the central selector/gear-change shaft (2) and detent rail (3) is carried out by means of a driver (24) arranged on the central selector/gear-change shaft.

7. Gearshift device according to Claim 1, characterized in that a dual shift finger (201, 201A, 201B) fastened to a main shift shaft (20) operates together with a detent device (6) in that it engages in a recess (66) in a slide plate (62) which is shaped in such a way that whenever a gearshift is made to the lower gear in a path the slide plate (62) remains stationary, but whenever a gearshift is made to the upper gear in this path the slide plate (62) is pushed in the same direction by the dual shift finger, that an oblique cutout (65) in this slide plate displaces a locking slide (63) via a pin (64) fitted to the latter, the locking slide being arranged in the same plane but with its motion offset by 90° to the dual shift finger and the slide plate, that the locking slide (63) is held in the locking position as well as in the initial position by a detent device (67) fitted with a spring (670), that the locking slide (63) prevents the shift lever from being returned to a lower path when shifting down to neutral, whereby great shift effort is required to counteract it, and it can only be moved to the neutral position during a downshift to the lower gear in this path by means of the recess (66) and the oblique cutout (65) in the slide plate (62) and the pin (64) in the locking slide, thereby ensuring that the gearshift lever is returned to the next lower path whenever the neutral position of this path is selected.

8. Gearshift device according to Claim 2, characterized in that the extended shift or rotating shaft (71) is fitted with a detent device (7) which has a groove (712) and a driver (711) on the rotating shaft (71) and a pivoting retaining lever (75) which engages in the groove (712) when in the detent position.

9. Gearshift device according to Claim 8, characterized in that the retaining lever (75) is supported in a detent housing (74) flange-mounted to a selector housing (73), has a recess (751) which operates together with the driver (711) on the rotating shaft (71), has a finger (755) which in the locking position engages in the groove (712) on the rotating shaft (71), and two bores (753, 754) in which a detent device (77) engages as required, the retaining lever being arranged at right angles to the rotating shaft (71), preferably between the detent housing (74) and a cover (76) on the end face.

## Revendications

1. Mécanisme de changement de vitesse pour une boîte de vitesses à engrenages, prioritaire pour une boîte de véhicule automobile à 6 vitesses avec un levier de sélection (S) servant à sélectionner et à passer toutes les vitesses avec tige de commande (5, 52, 72), pour le passage des vitesses d'un couloir avec une grille en H semblable à la boîte à 4 vitesses et des dispositifs de maintien et de retour du levier de sélection (S) dans des couloirs définis au préalable (3/4), caractérisé en ce qu'un dispositif d'encliquetage (1, 6) est disposé pour un couloir voisin d'un couloir de sélection prédéfini (3/4) par exemple pour les rapports 5/6,
— maintenant le levier de sélection dans le couloir lors d'un passage déjà réalisé ou pratiquement réalisé dans la vitesse la plus élevée de ce couloir, p. ex. en 6e vitesse
— et permettant le retour du levier de vitesses (S) dans un couloir plus bas, p. ex. 3/4 lors d'un passage déjà réalisé ou pratiquement réalisé dans une vitesse plus basse de ce couloir, p. ex. en 5e vitesse, lorsque le levier de sélection (S) est à nouveau actionné au point mort.

2. Mécanisme de changement de vitesse selon la dénomination générale de la revendication 1 et un arbre central principal et sélecteur ou encore un arbre rotatif (2, 71) entre le levier de sélection (S) et les tiges de commande (72), maintenu par le levier de sélection ou reconduit dans des couloirs prédéfinis, caractérisé en ce qu'un dispositif d'encliquetage (1, 7) est disposé pour un couloir voisin d'un couloir de sélection prédéfini (3/4), par exemple pour les rapports 5/6,
— maintenant l'arbre central principal, sélecteur ou encore rotatif (2, 71) et le levier de sélection (S) dans le couloir lors d'un passage déjà réalisé ou pratiquement réalisé dans la vitesse la plus élevée de ce couloir, p. ex. en 6e vitesse, et
— permettant le retour de l'arbre central principal, sélecteur ou de l'arbre rotatif (2, 71) et du levier de sélection (S) dans un couloir plus bas, p. ex. 3/4 lorsque le levier de sélection (S) est à nouveau actionné au point mort lors d'un passage déjà réalisé ou pratiquement réalisé dans une vitesse plus basse de ce couloir, par exemple en 5e vitesse.

3. Mécanisme de changement de vitesse selon revendication 1 ou 2, caractérisé en ce que ce mécanisme d'encliquetage (1) ou dispositif d'encliquetage (67, 77) est pourvu de ressorts (14, 670, 770) pour le retour et/ou l'arrêt.

4. Mécanisme de changement de vitesse selon revendication 3, caractérisé en ce que les ressorts (14, 670, 770) du mécanisme d'encliquetage (1) ou dispositif d'encliquetage (67, 77) peuvent être enclenchés avec une force de sélection relativement élevée.

5. Mécanisme de changement de vitesse selon l'une des revendications précitées, caractérisé en ce que le mécanisme d'encliquetage (1) est disposé sur une tige de commande (5) ou sur une tige d'arrêt (3) coulissable en synchronisation avec arbre central principal et sélecteur (2).

6. Mécanisme de changement de vitesse selon revendication 5, caractérisé en ce que le mécanisme d'encliquetage (1) dans un carter (11) est pourvu d'un alésage (12) décalé deux fois transversal à la tige d'arrêt (3) avec deux douilles (13, 15) et un ressort de compression (14) placé entre; le fond de la première douille ayant une forme ronde vers l'extérieur (131) ayant, avec une came de commande, une influence sur le verrouillage des couloirs (23) et étant enclenchée par le mécanisme d'encliquetage (1) la faisant fonctionner, de sorte que la deuxième douille (15) sur le fond extérieur (150) est pourvu d'une came de commande (151) qui agit avec une came de commande (31) soumise à la tige de commande (3) et entre en fonctionnement par l'intermédiaire des ressorts de pression (14) en sorte que le mouvement relatif entre le mécanisme d'encliquetage (1) d'une part et l'arbre central principal et sélecteur (2) ainsi que la tige d'arrêt d'autre part actionne un boulon de butée (43) fixe placé dans le carter de la boîte de vitesses (4) en maintenant le mécanisme d'encliquetage (1) environ à mi-chemin du point mort aux deux positions finales du couloir 5/6 et que, par ce mouvement relatif, un actionnement tout comme un repos du mécanisme d'encliquetage se produisent et le mouvement axial synchronisé de l'arbre central principal et de sélection (2) et de la tige d'arrêt (3) se produit au moyen d'un entraîneur (24) placé sur l'arbre central principal et de sélection.

7. Mécanisme de changement de vitesse selon revendication 1, caractérisé en ce qu'un double doigt de passage des vitesses (201, 201A, 201B) fixé sur l'arbre principal (20) fonctionne avec un mécanisme d'arrêt (6), ce dernier s'engrenant dans la cavité (66) d'une plaque coulissante (62), conçue en sorte que lors du passage dans la vitesse inférieure d'un couloir, la plaque coulissante (62) n'est pas déplacée et lors du passage dans la plus grande vitesse de ce couloir, le double doigt de passage des vitesses déplace la plaque coulissante (62) dans la même direction, en sorte que l'évidement oblique (65) de cette plaque coulissante déplace un registre d'arrêt (63) au moyen d'une goupille (64) disposée dans ce dernier, cette goupille étant déplacée à même hauteur de 90° dans le sens de mouvement, placée vers le double doigt de passage des vitesses et la plaque coulissante, de façon que dans cette position de blocage de même qu'en position de départ, le registre d'arrêt (63) soit maintenu par un dispositif d'encliquetage (67) pourvu d'un ressort (670) en sorte que le registre d'arrêt (63) empêche le retour du levier de sélection dans un couloir inférieur lors de la rétrogradation en position de point mort, étant enclenchable uniquement à condition de développer une force élevée et étant actionné seulement lors du passage dans la vitesse inférieure de ce couloir par la cavité (66) et l'évidement oblique (65) de la plaque coulissante (62) et la goupille (64) du registre d'arrêt dans la position débloquée, en sorte que le levier de sélection des vitesses lors du passage au point mort de ce couloir soit guidé vers le prochain couloir inférieur.

8. Mécanisme de changement de vitesse selon revendication 2, caractérisé en ce qu'un dispositif d'encliquetage (7) est disposé sur un arbre de sélection ou un arbre rotatif (71) prolongé avec une gorge (722) et un entraîneur (711) sur l'arbre rotatif (71) et un levier d'arrêt (75) pivotant, s'engrenant dans la gorge (712) en position d'arrêt.

9. Mécanisme de changement de vitesse selon revendication 8, caractérisé en ce que le levier d'arrêt (75) est logé dans un carter (74) bridé au carter de changement de vitesse (73), qu'il a une cavité (751) travaillant avec l'entraîneur (711) sur l'arbre rotatif (71), qu'il a un doigt (755) qui s'engrène en position de blocage dans la gorge (712) de l'arbre rotatif (71) et avec deux alésages (753, 754), dans lesquels au choix un dispositif d'encliquetage s'engrène, ce dernier étant prioritaire en transversale de l'arbre rotatif (71) entre le carter (74) et un couvercle frontal (76) dans sa disposition.

0 222 761

FIG.1

FIG.2

FIG.3

11

FIG.4

FIG.5

FIG.6

FIG.7

41

22

2

1

14

16

12

3

23

1

131

14

13

24

130

43

3

4

2

3

32

FIG.8

24

FIG.9

FIG.9A

FIG.10

FIG.10A

FIG.11A

FIG.11

FIG.12

FIG.13

FIG.14

FIG.15

FIG.16

FIG.17